# FASCICULE DE BREVET EUROPEEN

(11) **EP 2 969 551 B1**
(45) Date de publication et mention de la délivrance du brevet: **27.01.2021**
(21) Numéro de dépôt: 14716880.1
(22) Date de dépôt: 14.03.2014
(51) Int. Cl.: B32B 17/10, B60J 1/00, B60J 1/18, E06B 3/663, F21V 33/00, F21K 99/00, G02B 6/00, G09F 21/04

(54) **VITRAGE COMPRENANT UN ECRAN TRANSPARENT**
VERGLASUNG MIT EINER TRANSPARENTEN SCHEIBE
GLAZING COMPRISING A TRANSPARENT SCREEN

(30) Priorité: 15.03.2013 FR 1352313
(43) Date de publication de la demande: 20.01.2016
(73) Titulaire: SAINT-GOBAIN GLASS FRANCE, 92400 Courbevoie (FR)
(72) Inventeur: ODULINSKI, Andrzej, PL-68200 Zary (PL); D'AUDIFFRET, Stéphane, F-45000 Orleans (FR)
(74) Mandataire: Saint-Gobain Recherche
(86) Numéro de dépôt international: PCT/FR2014/050599
(87) Numéro de publication internationale: WO 2014/140502

(56) Documents cités:
- WO-A1-2007/077099
- WO-A1-2007/093327
- WO-A1-2012/098330
- WO-A1-2012/168647
- WO-A1-2013/068678
- WO-A1-2013/093301

## Description

L'invention concerne la réalisation d'un vitrage latéral d'un moyen de transport, comprenant un écran de visualisation transparent.

Par «écran de visualisation transparent » (en anglais «transparent display ») au sens de la présente invention il faut comprendre un écran de visualisation d'informations ne disposant pas de sa propre source lumineuse artificielle. Un tel écran nécessite ainsi, pour la visualisation des informations qu'il affiche, soit la lumière naturelle du jour, (celle du soleil), soit une source de lumière artificielle. Dans tous les cas, l'apport de lumière nécessaire à la visualisation des informations doit venir de l'arrière de l'écran vers l'avant pour permettre à quelqu'un situé devant cet écran de voir ces informations.

Un écran de visualisation transparent n'est pas un écran de projection ou de rétroprojection, ni une lampe, mais un écran qui intègre un système de production d'images et qui permet ainsi d'afficher des photographies, des animations ou des films, tous dans un format numérique.

L'art antérieur connaît en particulier les demandes internationales de brevet N° WO 2012/ 168647, WO 2012/ 098330, WO 2007/ 077099, mais dans ces documents, il s'agit de vitrages éclairants, assimilable à des lampes; il n'y a pas de production d'images animées mais seulement mise à disposition de lumière selon un schéma fixe.

WO 2007/ 093327 divulgue un système d'information pour un avion comprenant une fenêtre ayant au moins une feuille, une unité de contrôle, caractérisé en ce que la feuille est revêtue avec un écran de visualisation translucent lié à l'unité de contrôle afin de présenter d'information numérique.

Un écran de visualisation selon l'invention permet que la lumière naturelle ou artificielle provenant de derrière l'écran, se propage en avant de l'écran ; bien sûr, si l'écran affiche des informations, cette lumière est modifiée par son passage à travers l'écran ; toutefois, son intensité est peu modifiée par le passage à travers l'écran.

Un tel écran transparent, à la différence d'un écran opaque, permet ainsi de bénéficier de plus de lumière en avant de l'écran.

En outre, un tel écran transparent permet de voir au travers l'écran et donc, pour un usager situé devant l'écran, de distinguer ce qui se passe derrière l'écran suivant si ses yeux focalisent sur l'écran ou en arrière de l'écran. La netteté du champ de vision en arrière est peu affectée par la vision à travers l'écran.

Il apparaît qu'il serait intéressant de pouvoir intégrer des écrans transparents dans des vitrages de moyens de transport, et notamment dans des vitrages latéraux de moyens de transport public, afin de pouvoir afficher des informations relative au transport et/ou de la publicité pour les usagers de ces moyens de transport, tout en permettant aux usagers de voir en arrière de l'écran.

L'invention concerne ainsi l'intégration dans un vitrage transparent d'un écran de visualisation transparent ; elle ne concerne pas l'intégration d'un écran de visualisation opaque (c'est-à-dire ne laissant passer aucune lumière et aucune image à travers) dans un vitrage.

Un inconvénient majeur de l'intégration d'un écran transparent dans un vitrage est que lorsque la lumière naturelle n'est plus suffisante du fait de la nuit ou d'un passage dans un tunnel par exemple, alors les informations affichées par l'écran ne sont plus visibles pour l'usager, à l'intérieur.

Le but de l'invention est ainsi de permettre de réaliser un rétro-éclairage artificiel efficace pour un écran transparent, et que ce rétro-éclairage soit simple, facile à mettre en œuvre sans pour autant empêcher (rendre opaque) de la lumière de passer à travers l'écran lorsque le rétro-éclairage artificiel n'est pas mis en œuvre.

L'invention a ainsi pour objet, dans son acception la plus large, un vitrage selon la revendication 1. Ce vitrage est un vitrage latéral d'un moyen de transport comprenant un écran de visualisation transparent situé dans une partie seulement du vitrage, au moins un substrat-guide de lumière situé plus à l'extérieur que ledit écran, au moins une source lumineuse située en périphérie dudit substrat-guide, en particulier en vis-à-vis d'un chant dudit substrat, ainsi qu'un moyen d'extraction du rayonnement émis par la source lumineuse, ladite source lumineuse étant, de préférence, formée de plusieurs diodes électroluminescentes.

De préférence, ladite source lumineuse est blanche et, de préférence encore, elle est formée de plusieurs diodes électroluminescentes blanches.

Selon l'invention, la source lumineuse est artificielle et est, de préférence, disposée en partie haute dudit vitrage. Elle peut être attachée au substrat-guide de lumière et coopérer avec celui-ci en émettant en son sein son rayonnement lumineux afin que le substrat-guide transmette ce rayonnement, la source lumineuse émettant/étant couplée par exemple à la tranche ou chant du substrat. Ce substrat est avantageusement clair ou transparent, et est généralement rapporté (assemblé après avoir été conçu séparément) sur ou contre la face extérieure de l'écran transparent ou à une certaine distance de celui-ci en ménageant alors un espace intercalaire entre eux. Il peut être organique et/ou plastique (par exemple en polycarbonate ou polyméthacrylate de méthyle PMMA), ou minéral, et est de préférence minéral ; en particulier, il s'agit d'un verre.

Le substrat-guide présente avantageusement une transmission lumineuse globale allant de 1,0%à 60,0%(en particulier de 10,0%à 50,0%et notamment de 20,0% à 40,0%. Il peut en outre présenter une transmission optique (déterminée de façon connue en faisant le rapport entre l'intensité transmise et l'intensité incidente à une longueur d'onde donnée) d'au moins 0,5%pour au moins une longueur d'onde, comprise dans le domaine du visible, au-dessus de 420 nm (et jusqu'à 780 nm), et de préférence d'au moins 0,5% pour toutes les longueurs d'onde comprises dans le domaine allant de 420 à 780 nm. Le substrat peut présenter cette ou ces propriétés « de manière intrinsèque», c'est-à-dire sans la présence d'un quelconque revêtement, ou être un substrat transparent qui est revêtu sur au moins une surface (autre que sa tranche) d'un revêtement constitué d'une ou de plusieurs couches et présentant cette ou ces propriétés intégrées sur l'équivalent de la totalité de sa surface. La transmission lumineuse est mesurée selon la norme ISO 9050 :2003 (mentionnant également la transmission optique) en utilisant l'illuminant D65, et est la transmission totale (notamment intégrée dans le domaine du visible et pondérée par la courbe de sensibilité de l'œil humain), tenant compte à la fois de la transmission directe et de l'éventuelle transmission diffuse, la mesure étant faite par exemple à l'aide d'un spectrophotomètre muni d'une sphère intégrante, la mesure à une épaisseur donnée étant ensuite convertie le cas échéant à l'épaisseur de référence de 4 mm selon la norme ISO 9050 :2003.

Le moyen d'extraction permet d'extraire les rayonnements du substrat-guide vers l'écran transparent. Le moyen d'extraction du rayonnement émis par la source lumineuse peut être par exemple un ou des éléments ou traitement(s) diffusants, en particulier un moyen d'extraction tel qu'une couche rapportée sur une surface (ou les deux surface) et/ou par tout traitement ou texturation différentielle d'une surface (local ou sur toute la surface), le cas échéant du guide d'onde, comme la gravure laser, l'impression d'émail, l'attaque chimique (acide, ...) ou mécanique (sablage, ...), etc. Une surface d'extraction peut également être prévue, par exemple dans l'épaisseur du guide-substrat, le cas échéant, suivant par exemple une technologie de gravure interne par laser.

Dans une variante, ledit substrat-guide de lumière comporte sur une partie d'au moins une surface (et de préférence sur une partie seulement de cette surface, pas sur toute cette surface), une pluralité de points régulièrement répartis sur ladite partie de surface, ces points étant notamment réalisés par sablage et/ou émaillage et/ou sérigraphie, pour permettre une extraction locale de la lumière (en direction de l'écran transparent), la surface totale des points couvrant, vu de l'extérieur, entre 50% à 90%, en incluant ces valeurs, de la surface totale dudit écran de visualisation transparent et notamment entre 60% à 80%, en incluant ces valeurs, de la surface totale dudit écran de visualisation transparent.

La surface totale des points peut couvrir, vu de l'extérieur, entre 60 %et 100 %de la surface totale dudit écran de visualisation transparent.

Il est import ant que les points soient peu visibles lorsqu'un usager, qui se trouve à l'intérieur, et qui est ainsi au maximum à quelques mètres du vitrage, porte son regard au loin, à l'extérieur.

Dans une variante particulière, pour que lesdits points soient peu visibles, ils sont oblong et sont régulièrement espacés, avec une largeur des points compris entre 0,5 et 5 millimètres, en incluant ces valeurs, une longueur comprise entre 1,2 et 2 fois la largeur, en incluant ces valeurs, et une distance entre les centres des points dans les deux directions x de la longueur et y de la largeur qui est comprise respectivement entre 1,5 et 10 fois la longueur et la largeur des points, en incluant ces valeurs, notamment entre 2 et 8 fois la longueur et la largeur des points, en incluant ces valeurs. Dans cette variante, il a été remarqué que des points oblongs avec une largeur des points compris entre 0,7 et 3 millimètres, en incluant ces valeurs, une longueur comprise entre 1,2 et 2 fois la largeur, en incluant ces valeurs, sont particulièrement peu visibles.

Dans le cas où l'écran transparent est rectangulaire, il est préférable que la longueur des points oblongs soit orientée selon la longueur de l'écran transparent.

Dans une autre variante particulière, pour que lesdits points soient peu visibles, ils sont ronds et sont régulièrement espacés, avec un diamètre des points compris entre 0,5 et 5 millimètres, en incluant ces valeurs, et une distance entre les centres des points dans les deux directions x de la longueur et y de la largeur qui est comprise respectivement entre 1,5 et 10 fois le diamètre des points, en incluant ces valeurs, notamment entre 2 et 8 fois le diamètre des points, en incluant ces valeurs. Dans cette variante, il a été remarqué que des points ronds avec un diamètre des points compris entre 0,7 et 3 millimètres, en incluant ces valeurs, sont particulièrement peu visibles.

Il est possible d'envisager d'autres formes de points, comme des carrés, des rectangles ou des étoiles. Pour qu'ils soient peu visibles, il est préférable que leurs dimensions totales soit dans la plage la plus large indiquée ci-dessous : une largeur des points compris entre 0,5 et 5 millimètres, en incluant ces valeurs, une longueur comprise entre 1 et 2 fois la largeur, en incluant ces valeurs.

De préférence, les points présentent tous la même dimension afin de faciliter la focalisation en arrière du vitrage.

Ledit substrat-guide présente, de préférence, un contour périphérique qui suit sensiblement le contour périphérique du vitrage et qui est de ce fait plus grand que le contour périphérique dudit écran de visualisation transparent.

Le vitrage selon l'invention peut comporter au moins un substrat de protection situé plus à l'intérieur que ledit écran de visualisation transparent, ce substrat de protection présentant de préférence un contour périphérique qui suit sensiblement le contour périphérique du vitrage et qui est de ce fait plus grand que le contour périphérique dudit écran de visualisation transparent.

De préférence, ledit substrat-guide de lumière ne présente pas de flou ; ledit vitrage ne présentant de préférence pas de flou.

Le vitrage peut comporter une cellule électronique pour l'allumage de la source lumineuse uniquement lorsque la luminosité extérieure est insuffisante, ainsi que, éventuellement, un capteur de luminosité extérieure.

Le vitrage peut par ailleurs comporter des moyens d'alimentations électriques dudit écran transparent et de ladite source lumineuse qui sont cachés de la vue de l'extérieure et de la vue de l'intérieure entre deux zones opaques, le contour dudit écran de visualisation transparent étant de préférence caché de la vue de l'intérieur et/ou de l'extérieur par une zone opaque.

Dans une variante spécifique, pour conférer une résistance mécanique supérieure au vitrage, ledit substrat-guide de lumière et/ou ledit substrat de protection est un substrat feuilleté comportant au moins deux feuilles de verre et une feuille de matière plastique disposée entre lesdites feuilles de verre.

Pour augmenter encore l'efficacité du rétro-éclairage, il est possible que ladite source lumineuse soit formée de plusieurs diodes électroluminescentes disposées en vis-à-vis d'au moins deux chants opposés dudit substrat-guide de lumière.

Le substrat, ou chaque substrat, du vitrage est de préférence clair, mais il peut aussi être coloré. Un des substrats au moins notamment peut être en verre coloré dans la masse. Le choix du type de coloration va dépendre des valeurs de transmission lumineuse recherchées pour certaines plages de longueurs d'ondes du domaine visible pour le vitrage de face avant une fois sa fabrication achevée.

Le vitrage selon l'invention peut présenter une structure feuilletée, associant notamment au moins deux substrats rigides du type verre par au moins une feuille de polymère thermoplastique, afin de présenter une structure de type verre/empilement de couches mincestfeuille(s) de polymère/verre. Le polymère peut notamment être à base de polyvinylbutyral PVB, éthylène vinylacétate EVA, polyéthylène téréphtalate PET, polychlorure de vinyle PVC.

Le vitrage de face avant peut alors présenter une structure de type : verre/feuille(s) de polymère/verre.

Le substrat-guide de face arrière et/ou le substrat de protection de face avant peut être bombé et/ou trempé en étant constitué d'un seul substrat. Il s'agit alorsd'un vitrage dit « monolithique ».

Avantageusement, la présente invention permet ainsi de réaliser un rétro-éclairage efficace, simple à fabriquer et simple à mettre en œuvre lorsque l'éclairage naturel n'est pas suffisant, et qui surtout ne s'oppose pas en totalité au passage de la lumière visible ; ainsi, une certaine transparence (non opacité) est conservée au travers du vitrage à l'endroit où l'écran transparent est disposé.

La présente invention permet en particulier de conserver les avantages d'un écran transparent : même si l'intensité de la lumière naturelle provenant de l'arrière de l'écran transparent est affectée en raison de la présence du moyen d'extraction, la netteté de la vision du champ de vision en arrière de l'écran est peu affectée (moyen d'extraction peu visible pour un usager focalisant son regard en arrière du vitrage).

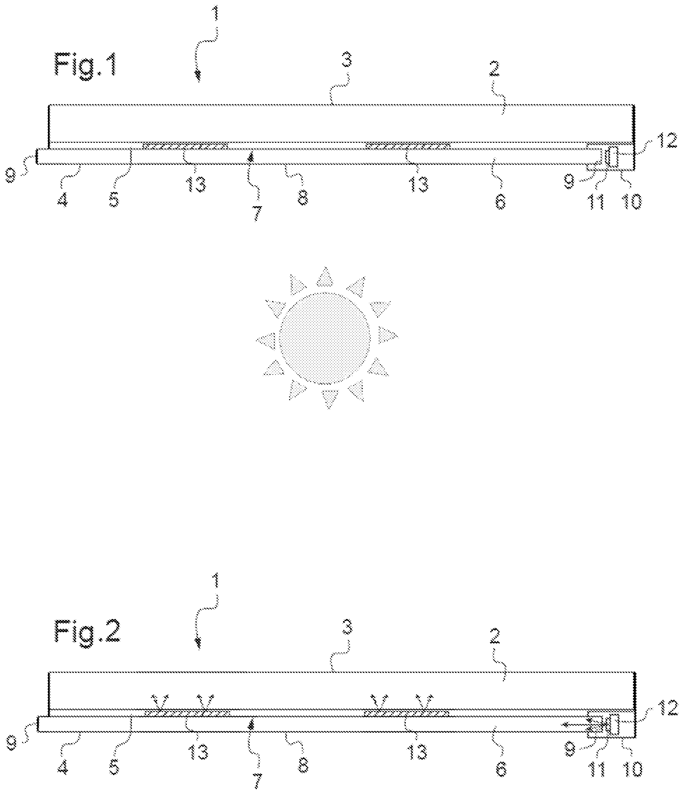

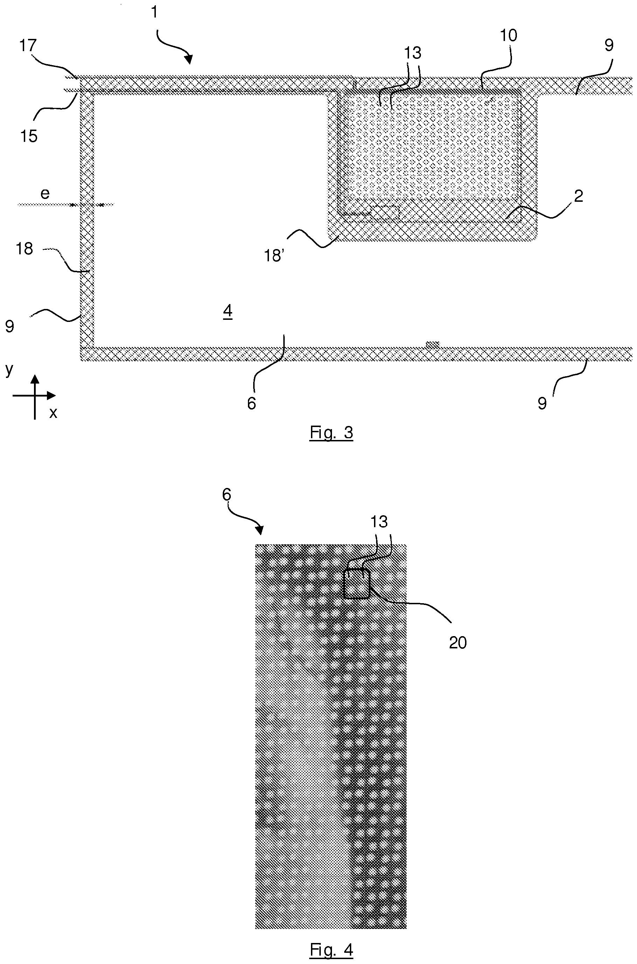

Les détails et caractéristiques avantageuses de l'invention ressortent des exemples non limitatifs suivants, illustrés à l'aide des figures ci-jointes illustrant :
- en figure 1, une vue schématique en coupe verticale d'un vitrage selon l'invention lorsque la lumière du jour est suffisante pour réaliser un rétro-éclairage satisfaisant pour l'écran transparent ;
- en figure 2, une vue schématique du vitrage de la figure 1 lorsque la lumière du jour n'est plus suffisante pour réaliser un rétro-éclairage satisfaisant pour l'écran transparent et lorsque le rétro-éclairage satisfaisant pour l'écran transparent est réalisé selon l'invention par une source lumineuse artificielle, le substrat-guide et le moyen d'extraction ;
- en figure 3, une vue schématique partielle de l'extérieur, du vitrage de la figure 1 ; et
- en figure 4, un exemple de réalisation de points répartis régulièrement avec la répartition observée pour un groupe de points (en l'occurrence ici un groupe de 4 points).

Dans les figures 1 à 2 les proportions entre les dimensions des différents éléments ne sont pas rigoureusement respectées afin de faciliter leur lecture ; les mêmes références désignent les mêmes éléments dans toutes les figures.

En figure 1, le vitrage 1 est un vitrage latéral d'un train vu en coupe verticale (le haut du vitrage a été positionné à droite de la figure) et comprenant un écran transparent 2 qui présente une face intérieure 3 et une face extérieure 4. Ce vitrage est illustré de jour et la lumière du jour (émise par le soleil) traverse l'écran 2 pour constituer un rétro-éclairage pour cet écran. Cette lumière traverse d'abord la face extérieure 4, un système de production d'image (non illustré plus en détail) situé entre la face extérieure 4 et la face intérieure 3, puis la face intérieure 3.

A titre d'exemple, il est possible d'utiliser l'écran transparent du produit commercialisé par l'entreprise Samsung sous la référence NL22B. Cet écran rectangulaire présente une diagonale de 22 pouces (environ 56 cm).

Le vitrage 1 comporte en outre un substrat 6 qui est positionné plus à l'extérieur que ledit écran transparent 2.

Le substrat 6 et l'écran transparent 2 sont ici disposés parallèles l'un à l'autre. Un espace intercalaire 5, facultatif, sépare le substrat 6 de l'écran transparent 2. L'écran transparent 2 est collé au substrat 6 par exemple par un joint de matière plastique (par exemple à base de polyuréthane), situé tout autour de l'écran.

Dans le cadre de l'invention, l'écran de visualisation transparent 2 est situé dans une partie seulement du vitrage dans le sens où il y a une partie du vitrage à travers laquelle il est possible de voir sans voir à travers l'écran transparent 2.

Le vitrage 1 comprend en outre un guide de lumière (ou «guide optique », ou «guide d'onde ») qui est réalisé par ce substrat 6 qui est disposé plus à l'extérieur que l'écran transparent, ce substrat-guide se présentant, par exemple, sous forme d'une plaque de verre clair borosilicate de 2 à 6 mm d'épaisseur. Ce substrat-guide 6 présente une face intérieure 7, une face extérieure 8 (qui est aussi la face extérieure 4 du vitrage 1), et une tranche 9. Ce substrat-guide est couplé à une source lumineuse 10 située en périphérie de la tranche 9 (ne dépassant pas à la périphérie de l'écran 2 pour former un module compact) formée d'une pluralité de LEDs 11 (diodes électroluminescentes) portées par une embase logée dans un profilé 12. Ce profilé 12 est intégré à un montant périphérique (ici le montant haut) du vitrage.

Lorsque la lumière du jour n'est plus suffisante pour réaliser un rétro-éclairage efficace pour l'écran transparent 2, alors les LED sont allumées et émettent un rayonnement dans le guide optique constitué par le substrat-guide de lumière 6, comme indiqué par les flèches orientées de droite à gauche et situées à gauche des LED 11 en figure 2.

De préférence, un capteur de luminosité extérieure (non illustré) détecte la luminosité insuffisante à proximité de l'écran transparent et provoque l'allumage de la source lumineuse 10 uniquement lorsque la luminosité extérieure est insuffisante, grâce à une cellule électronique.

Le vitrage comporte en outre un moyen d'extraction du rayonnement émis par la source lumineuse, ce moyen se présentant ici sous forme de plusieurs points 13 (deux points sont illustrés en figures 1 et 2) émaillées ou sablées, situées sur la face intérieure 7 du substrat-guide 6 afin que la lumière émise par la source lumineuse 10 et passant à l'intérieur du substrat-guide 6 soit extraite en direction de l'écran transparent (comme indiqué par les flèches allant du bas vers le haut au-dessus des points 13 en figure 2).

Dans un mode non représenté, la source lumineuse peut dépasser de la périphérie de l'écran transparent ; il est possible par ailleurs de prévoir une seconde source lumineuse (par exemple contre la tranche 9, à gauche sur les figures 1 et 2 ; en bas de l'écran transparent 2).

Il est possible que le moyen d'extraction utilisé soit constitué d'une pluralité ou d'une multitude de zones rendues diffusantes par sablage localisé. Ce moyen peut aussi être non localisé (par exemple sablage total ou sérigraphie totale non opaque d'une surface du substrat-guide).

Les diodes peuvent être encapsulées, c'est-à-dire comprendre un composant semi-conducteur et une enveloppe (par exemple en résine type époxy ou nylon), encapsulant le composant semi-conducteur. Les diodes peuvent aussi être des puces semi-conductrices sans lentilles de collimation par exemple de taille de l'ordre de la centaine de µm ou du mm, éventuellement avec une encapsulation minime (par exemple de protection).

Les diodes peuvent être portées par un support ou barrette ou embase, cette embase pouvant présenter une surface (plane ou inclinée) traitée et/ou rendue réfléchissante pour une meilleure efficacité lumineuse, par exemple revêtue d'une laque ou peinture et/ou couche miroir, et/ou couplée à un réflecteur blanc ou métallique pour mieux diriger le rayonnement émis.

On peut notamment utiliser comme source lumineuse des LEDs blanches fabriquées par exemple à partir d'une puce de cristal semi-conducteur tel que le nitrure de gallium/ indium (InGaN) émettant dans le bleu recouverte d'une résine transparente (telle que silicone ou époxy) contenant des luminophores minéraux (par exemple YAG:Ce), absorbant le bleu et émettant dans le jaune. Comme autres exemples, on peut utiliser des LEDs polychromatiques ; on peut citer notamment les LEDs ou afficheurs suivants : la gamme XLamp® LED ou « High Brightness LED» de la société CREE, la gamme NichiaHelios, NichiaRigel, « Lamp type LED », NSSM, NSSW, NSEW, NS9 et NS2 de la société Nichia, la série des « TOPLED® » blanches et les références LW Q38E, LW L283 et LW Q38G de la société OSRAM, la gamme « Luxeon® Rebel White » et « Luxeon® K2 » de la société Philips Lumileds, les LEDs de références E1S19, E1S27, E1S62, E1S66, E1S67, E1SAG, E1SAP, EASAA, EASAU, EASAV, E1L4x et E1L5x de la société Toyoda Gosei, les LEDS de références HSMW-C120, HSMW-C130, HSMW-C191, HSMW-C197 et HSMW-C265 de la société Avago Technologie, les LEDs de références LTW-C193TS5 et LTW-C191TS5 de la société LITE-ON, les LEDs de références WH104L-H, WH104-NZ et WH107 de la société Seoul Semiconductor, la LED de référence 19-213/T1D-KS1T1B2/3T de la société Everlight, etc.

La figure 3 illustre le vitrage tel qu'il est perçu de l'extérieur.

La majorité du vitrage 1 est complètement transparent : Le vitrage 1 est transparent en dehors du clair de vue où l'écran transparent 2 est présent.

Sur cette figure 3, le moyen d'extraction du rayonnement est constitué d'une pluralité de points 13, réalisés par sérigraphie, de préférence de couleur claire, et notamment blancs, disposés sur la surface intérieure du substrat-guide 6, comme les points 13 en figures 1, 2.

Le substrat-guide 6 comporte ainsi sur une partie de sa surface intérieure (et sur une partie seulement de cette surface, pas sur toute cette surface), une pluralité de points régulièrement répartis sur ladite partie de surf ace.

La surface totale des points couvre, vu de l'extérieur, entre 50%à 90%, en incluant ces valeurs, de la surface totale de l'écran de visualisation transparent 2 et notamment entre 60%à 80%, en incluant ces valeurs, de la surface totale de l'écran de visualisation transparent 2.

En figure 3 les points sont ronds et sont régulièrement espacés, avec un diamètre des points de 1,3 millimètre, et une distance entre les centres des points dans les deux directions x de la longueur (ou plutôt la longueur du vitrage) et y de la largeur (ou plutôt de la hauteur du vitrage) qui est 2 fois le diamètre des points.

Des moyens d'alimentations électriques 15 dudit écran transparent 2 et des moyens d'alimentations électriques 17 de ladite source lumineuse 10 sont cachés de la vue de l'extérieure (et de la vue de l'intérieure) entre deux zones opaques 18 (une seule est visible en figure 3) d'une largeur e d'environ 35 mm. En figure 3, les moyens d'alimentations électriques 17 semblent être disposées au-dessus du substrat-guide 6, mais c'est uniquement pour mieux visualiser leur présence.

En outre, le contour de l'écran de visualisation transparent est lui aussi de préférence caché de la vue de l'intérieur par une zone opaque 18'.

Ces zones opaques 18, 18' peuvent être réalisées par sérigraphie, en particulier en surface intérieure 7 du substrat-guide 6, mais sont alors, de préférence, de couleur sombre, et notamment constituées de points noirs.

En figure 4 est illustré une pluralité de points blancs qui sont répartis régulièrement à la surface du substrat-guide 6 ; ici, la régularité ne s'observe pas de point à point, mais de groupe 20 de point s à groupe de points.

Ici un groupe 20 de point comporte 4 points qui forment ainsi un motif de points ronds présentant le même diamètre et ce motif étant reproduit un grand nombre de fois. Ce motif est ici est parallélogramme irrégulier : la hauteur qui relie le centre des deux points à gauche est supérieure à la hauteur qui relie le centre des deux points à droite et la longueur qui relie le centre des deux point s en haut est supérieure à la longueur qui relie le centre des deux points en bas.

Sur le côté gauche de la figure 4, ce qui apparaît en transparence est une portion de paysage extérieur.

La présente invention est décrite dans ce qui précède à titre d'exemple. Il est entendu que l'homme du métier est à même de réaliser différentes modifications sans pour autant sortir du cadre du brevet tel que défini par les revendications.

## Revendications

1. Vitrage (1) latéral d'un moyen de transport comprenant un écran de visualisation transparent (2) qui intègre un système de production d'images permettant d'afficher des images dans un format numérique, **caractérisé en ce que** ledit écran de visualisation transparent (2) est situé dans une partie seulement du vitrage avec une partie du vitrage à travers laquelle il est possible de voir sans voir à travers l'écran transparent (2), **et en ce que** ledit vitrage (1) comporte au moins un substrat-guide de lumière (6) situé plus à l'extérieur que ledit écran, au moins une source lumineuse (10) située en périphérie dudit substrat-guide de lumière (6), en particulier en vis-à-vis d'un chant dudit substrat (6), ainsi qu'un moyen d'extraction du rayonnement émis par la source lumineuse, ladite source lumineuse étant, de préférence, formée de plusieurs diodes électroluminescentes.

2. Vitrage (1) selon la revendication 1, ***caractérisé en ce que*** ledit substrat-guide de lumière (6) comporte sur une partie d'au moins une surface, une pluralité de points régulièrement répartis sur ladite partie de surface, ces points étant notamment réalisés par sablage et/ou émaillage et/ou sérigraphie, pour permettre une extraction locale de la lumière, la surface totale des points couvrant, vu de l'extérieur, entre 50% à 90%, en incluant ces valeurs, de la surface totale dudit écran de visualisation transparent (2) et notamment entre 60% à 80%, en incluant ces valeurs, de la surface totale dudit écran de visualisation transparent (2).

3. Vitrage (1) selon la revendication 2, ***caractérisé en ce que*** lesdits points sont oblong et sont régulièrement espacés, avec une largeur des points compris entre 0,5 et 5 millimètres, en incluant ces valeurs, une longueur comprise entre 1,1 et 2 fois la largeur, en incluant ces valeurs, et une distance entre les centres des points dans les deux directions x de la longueur et y de la largeur qui est comprise respectivement entre 1,5 et 10 fois la longueur et la largeur des points, en incluant ces valeurs, notamment entre 2 et 8 fois la longueur et la largeur des points, en incluant ces valeurs.

4. Vitrage (1) selon la revendication 2, ***caractérisé en ce que*** lesdits points sont ronds et sont régulièrement espacés, avec un diamètre des points compris entre 0,5 et 5 millimètres, en incluant ces valeurs, et une distance entre les centres des points dans les deux directions x de la longueur et y de la largeur qui est comprise respectivement entre 1,5 et 10 fois le diamètre des points, en incluant ces valeurs, notamment entre 2 et 8 fois le diamètre des points, en incluant ces valeurs.

5. Vitrage (1) selon l'une quelconque des revendications 1 à 4, ***caractérisé en ce que*** ledit substrat-guide de lumière (6) présente un contour périphérique qui suit sensiblement le contour périphérique du vitrage (1).

6. Vitrage (1) selon l'une quelconque des revendications 1 à 5, ***caractérisé en ce qu'*il** comporte un substrat de protection situé plus à l'intérieur que ledit écran de visualisation transparent (2), ce substrat de protection présentant de préférence un contour périphérique qui suit sensiblement le contour périphérique du vitrage (1).

7. Vitrage (1) selon l'une quelconque des revendications 1 à 6, ***caractérisé en ce que*** ledit substrat-guide de lumière (6) ne présente pas de flou, ledit vitrage (1) ne présentant de préférence pas de flou.

8. Vitrage (1) selon l'une quelconque des revendications 1 à 7, ***caractérisé en ce qu'*il** comporte une cellule électronique pour l'allumage de la source lumineuse (10) uniquement lorsque la luminosité extérieure est insuffisante, ainsi que, éventuellement, un capteur de luminosité extérieure.

9. Vitrage (1) selon l'une quelconque des revendications 1 à 8, ***caractérisé en ce qu'*il** comporte des moyens d'alimentations électriques dudit écran transparent (2) et de ladite source lumineuse (10) qui sont cachés de la vue de l'extérieure et de la vue de l'intérieure entre deux zones opaques (18), le contour dudit écran de visualisation transparent étant de préférence caché de la vue de l'intérieur et/ou de l'extérieur par une zone opaque.

10. Vitrage (1) selon l'une quelconque des revendications 1 à 9, ***caractérisé en ce que*** ledit substrat-guide de lumière (6) et/ou ledit substrat de protection est un substrat feuilleté comportant au moins deux feuilles de verre et une feuille de matière plastique disposée entre lesdites feuilles de verre.

11. Vitrage (1) selon l'une quelconque des revendications 1 à 10, ***caractérisé en ce que*** ladite source lumineuse est formée de plusieurs diodes électroluminescentes disposées en vis-à-vis d'au moins deux chants opposés dudit substrat-guide de lumière (6).

## Patentansprüche

1. Seitliche Verglasung (1) eines Transportmittels, umfassend eine transparente Anzeigescheibe (2), in der ein System zur Bildproduktion integriert ist, das die Anzeige von Bildern in einem Digitalformat erlaubt, **dadurch gekennzeichnet, dass** die transparente Anzeigescheibe (2) in einem ausschließlich der Verglasung zugehörigen Teil angeordnet ist, mit einem Teil der Verglasung, durch die es möglich ist hindurchzusehen, ohne durch die transparente Scheibe (2) hindurchzusehen, **und dadurch, dass** die Verglasung (1) mindestens ein Lichtleitersubstrat (6), das weiter außen als die Scheibe angeordnet ist, mindestens eine Lichtquelle (10), die im Umfang des Lichtleitersubstrats (6) angeordnet ist, insbesondere gegenüber einer Laibung des Substrats, (6) sowie ein Mittel zur Extraktion der durch die Lichtquelle abgegebenen Strahlung einschließt, wobei die Lichtquelle bevorzugt aus mehreren Leuchtdioden gebildet ist.

2. Verglasung (1) nach Anspruch 1, ***dadurch gekennzeichnet, dass*** das Lichtleitersubstrat (6) auf einem Teil von mindestens einer Oberfläche eine Vielzahl von über den Teil der Oberfläche regelmäßig verteilen Punkten einschließt, wobei diese Punkte besonders durch Sandstrahlung und/oder Emaillierung und/oder Siebdruck realisiert sind, um eine lokale Extraktion des Lichts zu ermöglichen, wobei die Gesamtoberfläche der Punkte, von außen gesehen, zwischen 50 % und 90 %, einschließlich dieser Werte, der Gesamtoberfläche der transparenten Anzeigescheibe (2) und besonders zwischen 60 % und 80 %, einschließlich dieser Werte, der Gesamtoberfläche der transparenten Anzeigescheibe (2) bedeckt.

3. Verglasung (1) nach Anspruch 2, ***dadurch gekennzeichnet, dass*** die Punkte länglich und regelmäßig beabstandet sind, mit einer Punktebreite von zwischen 0,5 und 5 Millimeter, einschließlich dieser Werte, einer Länge von zwischen 1,1 und 2 Mal die Breite, einschließlich dieser Werte, und einem Abstand zwischen den Punktezentren in beide Richtungen x der Länge und y der Breite, der jeweils zwischen 1,5 und 10 Mal die Länge und die Breite der Punkte, einschließlich dieser Werte, besonders zwischen 2 und 8 Mal die Länge und die Breite der Punkte, einschließlich dieser Werte, beträgt.

4. Verglasung (1) nach Anspruch 2, ***dadurch gekennzeichnet, dass*** die Punkte rund und regelmäßig beabstandet sind, mit einem Punktedurchmesser von zwischen 0,5 und 5 Millimeter, einschließlich dieser Werte, und einem Abstand zwischen den Punktezentren in beide Richtungen x der Länge und y der Breite, der jeweils zwischen 1,5 und 10 Mal der Punktedurchmesser, einschließlich dieser Werte, besonders zwischen 2 und 8 Mal der Punktedurchmesser, einschließlich dieser Werte, beträgt.

5. Verglasung (1) nach einem der Ansprüche 1 bis 4, ***dadurch gekennzeichnet, dass*** das Lichtleitersubstrat (6) eine Umfangskontur aufweist, die im Wesentlichen der Umfangskontur der Verglasung (1) folgt.

6. Verglasung (1) nach einem der Ansprüche 1 bis 5, ***dadurch gekennzeichnet, dass*** sie ein Schutzsubstrat einschließt, das weiter innen als die transparente Anzeigescheibe (2) angeordnet ist, wobei dieses Schutzsubstrat bevorzugt eine Umfangskontur aufweist, die im Wesentlichen der Umfangskontur der Verglasung (1) folgt.

7. Verglasung (1) nach einem der Ansprüche 1 bis 6, ***dadurch gekennzeichnet, dass*** das Lichtleitersubstrat (6) keine Unschärfen aufweist, wobei die Verglasung (1) bevorzugt keine Unschärfen aufweist.

8. Verglasung (1) nach einem der Ansprüche 1 bis 7, ***dadurch gekennzeichnet, dass*** sie eine elektronische Zelle zur Ansteuerung der Lichtquelle (10) nur bei unzureichender Helligkeit außen, sowie, gegebenenfalls, einen Außenhelligkeitsfühler einschließt.

9. Verglasung (1) nach einem der Ansprüche 1 bis 8, ***dadurch gekennzeichnet, dass*** sie Mittel zur Stromversorgung der transparenten Scheibe (2) und der Lichtquelle (10) einschließt, die von außen und innen gesehen zwischen zwei lichtundurchlässigen Bereichen (18) verborgen sind, wobei die Kontur der transparenten Anzeigescheibe bevorzugt von innen gesehen und/oder von außen gesehen durch einen lichtundurchlässigen Bereich verborgen ist.

10. Verglasung (1) nach einem der Ansprüche 1 bis 9, ***dadurch gekennzeichnet, dass*** das Lichtleitersubstrat (6) und/oder das Schutzsubstrat ein Verbundsubstrat ist, einschließlich mindestens zwei Glasschichten und eine Kunststoffschicht, die zwischen den Glasschichten ausgeführt ist.

11. Verglasung (1) nach einem der Ansprüche 1 bis 10, ***dadurch gekennzeichnet, dass*** die Lichtquelle aus mehreren Leuchtdioden gebildet ist, die gegenüber mindestens zwei dem Lichtleitersubstrat (6) entgegensetzen Laibungen angeordnet sind.

## Claims

1. A side glazing unit (1)of a means of transportation comprising a transparent display (2) comprising an image-production system configured to display digital format images, **characterized in that** said transparent display (2) is located in only one portion of the glazing unit insofar as it is possible to see through a portion of the glazing unit without having to look through the transparent display (2), **and in that** said glazing unit (1) comprises at least one light-guiding substrate (6) located nearer the exterior than said display, at least one light source (10) located on the periphery of said light-guiding substrate (6), in particular facing an edge face of said substrate (6), and a means for extracting the light emitted by the light source, said light source preferably being formed from a plurality of light emitting diodes.

2. The glazing unit (1) as claimed in claim 1, ***characterized in that*** said light-guiding substrate (6) comprises, on one portion at least of a surface, a plurality of dots regularly distributed over said surface portion, these dots especially being produced by sandblasting and/or enameling and/or screen printing, in order to allow local extraction of the light, the total area of the dots covering, seen from the exterior, between 50% to 90%, inclusive of these values, of the total area of said transparent display (2) and especially between 60% to 80%, inclusive of these values, of the total area of said transparent display (2).

3. The glazing unit (1) as claimed in claim 2, ***characterized in that*** said dots are oblong and regularly spaced, with a width of the dots comprised between 0.5 and 5 millimeters, inclusive of these values, a length comprised between 1.1 and 2 times the width, inclusive of these values, and a distance between the centers of the dots in the two directions x of the length and y of the width that is comprised between 1.5 and 10 times the length and width of the dots, respectively, inclusive of these values, and especially between 2 and 8 times the length and width of the dots, respectively, inclusive of these values.

4. The glazing unit (1) as claimed in claim 2, ***characterized in that*** said dots are round and regularly spaced, with a diameter of the dots comprised between 0.5 and 5 millimeters, inclusive of these values, and a distance between the centers of the dots in the two directions x of the length and y of the width that is comprised between 1.5 and 10 times the diameter of the dots, respectively, inclusive of these values, and especially between 2 and 8 times the diameter of the dots, respectively, inclusive of these values.

5. The glazing unit (1) as claimed in any one of claims 1 to 4, ***characterized in that*** said light-guiding substrate (6) has a peripheral outline that substantially follows the peripheral outline of the glazing unit (1).

6. The glazing unit (1) as claimed in any one of claims 1 to 5, ***characterized in that*** it comprises a protective substrate located nearer the interior than said transparent display (2), this protective substrate preferably having a peripheral outline that substantially follows the peripheral outline of the glazing unit (1).

7. The glazing unit (1) as claimed in any one of claims 1 to 6, ***characterized in that*** said light-guiding substrate (6) has no haze, said glazing unit (1) preferably having no haze.

8. The glazing unit (1) as claimed in any one of claims 1 to 7, ***characterized in that*** it comprises an electronic cell for turning on the light source (10) only when outside luminosity is too low, and, optionally, an outside luminosity sensor.

9. The glazing unit (1) as claimed in any one of claims 1 to 8, ***characterized in that*** it comprises means for supplying electrical power to said transparent display (2) and said light source (10) that are hidden from sight from the exterior and from sight from the interior between two opaque zones (18), the outline of said transparent display preferably being hidden from sight from the interior and/or from the exterior by an opaque zone.

10. The glazing unit (1) as claimed in any one of claims 1 to 9, ***characterized in that*** said light-guiding substrate (6) and/or said protective substrate is a laminated substrate comprising at least two glass sheets and a plastic sheet that is arranged between said glass sheets.

11. The glazing unit (1) as claimed in any one of claims 1 to 10, ***characterized in that*** said light source is formed from a plurality of light emitting diodes arranged facing at least two opposite edge faces of said light-guiding substrate (6).
